# EUROPÄISCHE PATENTSCHRIFT

(11) **EP 3 862 566 B1**
(45) Veröffentlichungstag und Bekanntmachung des Hinweises auf die Patenterteilung: **31.01.2024**
(21) Anmeldenummer: 21154813.6
(22) Anmeldetag: 02.02.2021
(51) Int. Cl.: F04C 2/344, F04C 14/22

(54) **ROTATIONSPUMPE MIT VERSTELLBAREM SPEZIFISCHEN FÖRDERVOLUMEN UND EINER DRUCKAUSGLEICHSFLÄCHE**
ROTARY PUMP WITH ADJUSTABLE SPECIFIC VOLUME AND PRESSURE COMPENSATION AREA
POMPE ROTATIVE À VOLUME DÉPLACÉ SPÉCIFIQUE RÉGLABLE ET SURFACE DE COMPENSATION DE PRESSION

(30) Priorität: 06.02.2020 DE 102020103081
(43) Veröffentlichungstag der Anmeldung: 11.08.2021
(73) Patentinhaber: Schwäbische Hüttenwerke Automotive GmbH, 73433 Aalen (DE)
(72) Erfinder: Peters, Sven, 88427 Bad Schussenried (DE)
(74) Vertreter: SSM Sandmair

(56) Entgegenhaltungen:
- WO-A1-2019/091559
- WO-A1-2019/137664
- DE-A1-102007 018 692
- DE-A1-102012 103 406

## Beschreibung

Die Erfindung betrifft eine Rotationspumpe mit verstellbarem spezifischen Fördervolumen, insbesondere eine Flügelzellenpumpe. Rotationspumpen, wie die Erfindung sie insbesondere betrifft, werden in Fahrzeugen beispielsweise zur Förderung von Schmiermitteln eingesetzt. Derartige Schmierölpumpen werden von dem mit Schmieröl zu versorgenden Motor des Fahrzeuges in direkter Abhängigkeit von dessen Drehzahlangetrieben. Die Drehzahl der Pumpe steigt dementsprechend mit der Drehzahl des Motors. Bei gleichbleibendem spezifischen Fördervolumen bewirkt eine Drehzahlsteigerung eine Steigerung des Fördervolumens. Da der Schmierölbedarf von Kraftfahrzeugen nur bedingt in Abhängigkeit zu der Drehzahl des Motors steht haben sich in der Vergangenheit Rotationspumpen mit verstellbarem spezifischen Fördervolumen entwickelt, um dem Schmieröl betriebsgerecht zu regeln.

Rotationspumpen, wie die Erfindung sie insbesondere betrifft, weisen zur Verstellung des spezifischen Fördervolumens eine sogenannte Stellstruktur auf. Insbesondere bei Flügelzellenpumpen wird diese Stellstruktur durch einen Stellring gebildet, welcher die Förderkammer der Flügelzellenpumpe umgibt und dessen Innenkontur die einzelnen Förderzellen radial nach außen begrenzt. Die Verstellung der Stellstruktur bewirkt abhängig von der Stellrichtung eine Vergrößerung oder Verkleinerung des spezifischen Fördervolumens, d.h. des Fördervolumens pro Umdrehung eines Pumpenrotors. Aus dem Stand der Technik sind beispielsweise Rotationspumpen, insbesondere Flügelzellenpumpen, bekannt auf deren Stellstruktur ein Rückstellelement, insbesondere eine Rückstellfeder, in Richtung des maximalen spezifischen Fördervolumens wirkt. Die Verstellung der Stellstruktur wird durch Druckbeaufschlagung einer Stellkammer oder mehrerer Stellkammern mit einem Stellfluid bewirkt, wobei die Stellkammer oder die Stellkammern entlang der Stellstruktur in der Weise angeordnet sind, dass das auf die Stellstruktur wirkende Stellfluid eine Kraft in entgegengesetzte Richtung zu der Kraft des Rückstellelements erzeugt. Das für die Verstellung erforderliche Stellfluid wird zweckmäßigerweise auf der Hochdruckseite der Pumpe von dem zu fördernden Fluid abgezweigt.

In Abhängigkeit vom Betriebszustand der Rotationspumpe befinden sich die auf die Stellstruktur wirkenden Kräfte, insbesondere die äußeren Kräfte, wie etwa die Rückstellkraft des Rückstellelements und die in der Stellkammer erzeugte Stellkraft sowie optional in einer oder mehreren weiteren Stellkammern erzeugten Stellkräfte, in einem Gleichgewicht. Durch eine Änderung im Kräftegleichgewicht kann das spezifische Fördervolumen der Pumpe durch eine Verstellung der Stellstruktur geändert werden. Bei Rotationspumpen dieser Bauart muss die Stellkraft bzw. müssen die Stellkräfte die Rückstellkraft des Rückstellelementes überwinden, um die Pumpe abzuregeln, das heißt um das spezifische Fördervolumen zu verringern. Das bedeutet, dass die Stellkammer bzw. die Stellkammern und das Rückstellelement so aufeinander abgestimmt sind, dass die mittels der Stellkammer oder der Stellkammern erzeugten Stellkräfte die Rückstellkraft des Rückstellelements überwinden müssen, um eine Abregelung beispielsweise in Abhängigkeit der Pumpendrehzahl zu bewirken.

Neben den vorstehend beschriebenen äußeren Kräften wirken auf die Stellstruktur auch innere Kräfte. Diese inneren Kräfte werden durch den auf die innere Kontur der Stellstruktur wirkenden Fluiddruck des in den Förderkammern befindlichen Fluids erzeugt. Auf die Innenkontur der Stellstruktur wirken über den Umfang verteilt nach radial außen gerichtete innere Kraftkomponenten. Eine Aufrechnung der einzelnen inneren Kraftkomponenten ergibt eine nach radial außen gerichtete resultierende innere Kraft. Je nach Wirkrichtung der resultierenden inneren Kraft kann dies zu einem ungewollten Regelverhalten der Pumpe führen. Entsprechend der Wirkrichtung der inneren Kraft kann die Pumpe beispielsweise frühzeitig und ungewollt abregeln oder der für eine Abregelung benötigte Stelldruck wird um den Betrag der inneren Kraft erhöht, dies führt zu einer verzögerten Abregelung der Pumpe.

Es ist daher eine Aufgabe der Erfindung das Regelverhalten der Rotationspumpe zu verbessern. Die Aufgabe wird durch die Erfindung nach Anspruch 1 gelöst.

Die Erfindung geht von einer Rotationspumpe, insbesondere einer Flügelzellenpumpe aus, welche ein Gehäuse mit einem auf der Niederdruckseite befindlichen Gehäuseeinlass und einem auf der Hochdruckseite der Rotationspumpe befindlichem Gehäuseauslass umfasst. Der Gehäuseeinlass ist mit einem innerhalb des Gehäuses befindlichen Niederdruckraum verbunden. Das Fluid, insbesondere das Schmieröl, wird von der Rotationspumpe über den Gehäuseeinlass aus einem Reservoir angesaugt und unter Druckerhöhung über den Gehäuseauslass an das zu versorgende Aggregat abgegeben. Für den Fall, dass es sich bei der Rotationspumpe um eine Vakuumpumpe handelt, befindet sich das zu versorgende Aggregat entsprechend auf der Saugseite der Rotationspumpe. Neben dem mit dem Gehäuseeinlass verbundenen Niederdruckraum umfasst das Gehäuse wenigstens einen Hochdruckraum, welcher mit dem Gehäuseauslass verbunden ist.

Das Gehäuse umfasst desweiteren wenigstens eine Förderkammer, welche auf der Niederdruckseite über einen Förderkammereinlass mit dem Niederdruckraum und auf der Hochdruckseite über einen Förderkammerauslass mit dem Hochdruckraum verbunden ist. Der Förderkammereinlass und der Förderkammerauslass können in Form einer Saugniere oder Druckniere oder anderweitigen Ausnehmung geformt sein. Der Förderkammereinlass und/oder der Förderkammerauslass können/kann in einer axial vorderen Begrenzung der Förderkammer und/oder in einer axialen hinteren Begrenzung der Förderkammer und/oder in einer radialen Begrenzung der Förderkammer ausgebildet sein. Dabei ist es nicht vonnöten, dass der Förderkammereinlass auf die gleiche Weise ausgestaltet ist wie der Förderkammerauslass.

Die axial vordere Begrenzung der Förderkammer kann beispielsweise durch einen Gehäusedeckel gebildet sein, während die axial hintere Begrenzung der Förderkammer beispielsweise durch das Gehäuse selbst gebildet werden kann, beispielsweise durch den Boden einer Gehäuseausnehmung. Die radiale Begrenzung der Förderkammer kann durch eine Stellstruktur gebildet werden, welche zur Ausübung einer das spezifische Fördervolumen der Rotationspumpe verstellenden Stellbewegung vorzugsweise hin und her beweglich ist. Der Förderkammereinlass und/oder der Förderkammerauslass können/kann durch eine Ausnehmung und/oder durch einen Durchbruch in der radialen Begrenzung und/oder durch eine Ausnehmung an der axial vorderen Begrenzung und/oder durch eine Ausnehmung an der axial hinteren Begrenzung der Förderkammer gebildet sein.

In bevorzugten Ausführungen ist der Förderkammereinlass in Form einer Saugniere im Bereich der axial hinteren Begrenzung der Förderkammer und einer Ausnehmung am axial vorderen Rand der Stellstruktur ausgebildet. In gleicher Weise ist der Förderkammerauslass bevorzugt in Form einer Druckniere im Bereich der axial hinteren Begrenzung der Förderkammer und einer Ausnehmung am axial vorderen Rand der Stellstruktur ausgebildet.

Die Ausnehmung in der Stellstruktur für den Förderkammereinlass überlappt in Umfangsrichtung mit der Saugniere wenigstens teilweise, bevorzugterweise vollständig. Ebenso überlappt die Ausnehmung für den Förderkammerauslass in Umfangsrichtung wenigstens teilweise mit der Druckniere, bevorzugterweise vollständig.

Der von der Ausnehmung in der Stellstruktur für den Förderkammereinlass überspannte Mittelpunktswinkel kann kleiner als der von der Saugniere überspannte Mittelpunktswinkel oder gleich groß sein. Der Mittelpunktswinkel für die Saugniere wird von der Rotationsachse des Pumpenrotors und den jeweiligen Anfangs- und Endpunkten in Umfangsrichtung definiert und der Mittelpunktswinkel der Ausnehmung in der Stellstruktur von dem Mittelpunkt der Innenkontur der Stellstruktur und den jeweiligen Anfangs- und Endpunkten in Umfangsrichtung. Der Mittelpunktswinkel der Saugniere ist bevorzugt kleiner 180°, besonders bevorzugt kleiner 170°. Der Mittelpunktwinkel der Ausnehmung für den Förderkammereinlass ist bevorzugt kleiner 90°, besonders bevorzugt kleiner 80°.

Der von der Ausnehmung in der Stellstruktur für den Förderkammerauslass überspannte Mittelpunktswinkel kann kleiner als der von der Druckniere überspannte Mittelpunktswinkel oder gleich groß sein. Die Definitionen für den Mittelpunkstwinkel der Saugniere gelten analog für den Mittelpunktswinkel der Druckniere. Ebenso gelten die Definitionen für die Ausnehmung in der Stellstruktur für den Förderkammereinlass analog für die Ausnehmung in der Stellstruktur für den Förderkammerauslass. Der Mittelpunktswinkel der Druckniere ist bevorzugt kleiner gleich 180°, besonders bevorzugt kleiner gleich 120°. Der Mittelpunktwinkel der Ausnehmung für den Förderkammerauslass ist bevorzugt kleiner gleich 90°, besonders bevorzugt kleiner gleich 80°. In bevorzugten Ausführungen ist der von der Ausnehmung in der Stellstruktur für den Förderkammerauslass überspannte Mittelpunktswinkel größer als der von der Ausnehmung in der Stellstruktur für den Förderkammereinlass überspannte Mittelpunktswinkel und der von der Druckniere überspannte Mittelpunktswinkel kleiner als der von der Saugniere überspannte Mittelpunktswinkel.

Der Förderkammereinlass und der Förderkammerauslass sind in Umfangsrichtung der Stellstruktur voneinander beabstandet und vorzugsweise einander über die Rotationsachse des Pumpenrotors gegenüberliegend angeordnet. Im Sinne der Erfindung bedeutet einander gegenüberliegend angeordnet, dass die Förderkammer fiktiv in ein erstes Kreissegment und in ein zweites Kreissegment aufgeteilt werden kann, welche jeweils einen Winkel von 180° umspannen, wobei sich die Förderzellen in dem ersten fiktiven Kreissegment in Drehrichtung des Rotors vergrößern und sich die Förderzellen in dem zweiten fiktiven Kreissegment in Drehrichtung des Rotors verkleinern. Der Förderkammereinlass ist bevorzugt in dem ersten der beiden Kreissegmente ausgebildet, und der Förderkammerauslass ist bevorzugt in den zweiten der beiden Kreissegmente ausgebildet.

Die Förderkammer wird in radialer Richtung von der Innenkontur der Stellstruktur begrenzt.

Die Stellstruktur kann insbesondere in Form eines Stellrings mit einer Außenumfangsfläche und einer Innenumfangsfläche ausgebildet sein. Die Innenumfangsfläche der Mantelfläche kann beispielsweise einem Kreiszylinder entsprechen. Dabei bildet die Innenumfangsfläche der Stellstruktur die radiale Begrenzung der Förderkammer.

Die Stellstruktur ist zur Ausübung einer das spezifische Fördervolumen der Rotationspumpe verstellenden Stellbewegung in eine erste Stellrichtung und der ersten Stellrichtung entgegen in eine zweite Stellrichtung hin und her beweglich. In bevorzugten Ausführungen ist die Stellstruktur in die erste Stellrichtung und in die zweite Stellrichtung linear hin und her beweglich, es ist aber auch eine Schwenkbewegung denkbar. Die Stellstruktur weist eine erste Gleitfläche und eine zweite Gleitfläche auf, welche der Führung der die Stellstruktur dienen. Die erste Gleitfläche und die zweite Gleitfläche sind bevorzugt an einem ersten Absatz und einem zweiten Absatz der Stellstruktur gebildet. Der erste Absatz und der zweite Absatz kragen von der Stellstruktur radial nach außen ab. Die Stellbewegung der Stellstruktur in die erste Stellrichtung bewirkt eine Erhöhung des Fördervolumens und die Stellbewegung der Stellstruktur in die zweite Stellrichtung eine Reduzierung des Fördervolumens. Die erste Gleitfläche kann unmittelbar von der Stellstruktur gebildet werden. Stattdessen kann die erste Gleitfläche aber auch von einem Dichtelement gebildet werden, das am Außenumfang der Stellstruktur angeordnet ist. Die zweite Gleitfläche kann unmittelbar von der Stellstruktur gebildet werden. Stattdessen kann die zweite Gleitfläche aber auch von einem Dichtelement gebildet werden, das am Außenumfang der Stellstruktur angeordnet ist. Dabei kann sowohl die erste Gleitfläche als auch die zweite Gleitfläche unmittelbar von der Stellstruktur oder stattdessen jeweils von einem am Außenumfang der Stellstruktur angeordneten Dichtelement gebildet werden. In noch einer Variante kann eine der Gleitflächen, beispielsweise die erste Gleitfläche, unmittelbar von der Stellstruktur und die andere der Gleitflächen von einem am Außenumfang der Stellstruktur angeordneten Dichtelement gebildet werden.

Zur Beaufschlagung der Stellstruktur mit einem in die erste Stellrichtung oder die zweite Stellrichtung wirkenden Stelldruck eines Stellfluids umfasst die Pumpe wenigstens eine erste Stellkammer, welche entlang eines Teils der Außenumfangsfläche der Stellstruktur ausgebildet ist. Die Stellstruktur weißt am äußeren Umfang eine Druckstellfläche auf, welche eine bewegbare Begrenzungswand der ersten Stellkammer bildet. Die Beaufschlagung der ersten Stellkammer, insbesondere die Beaufschlagung der Druckstellfläche, mit einem Stelldruck eines Stellfluids erzeugt eine auf die Stellstruktur in die erste Stellrichtung oder in die zweite Stellrichtung wirkende resultierende erste Stellkraft. In bevorzugten Ausführungen wirkt der Stelldruck des Stellfluids in der ersten Stellkammer in die zweite Stellrichtung. Besonders bevorzugt wirkt der Stelldruck in der ersten Stellkammer permanent auf die Stellstruktur.

Bevorzugterweise ist in Umfangsrichtung der Stellstruktur zur ersten Stellkammer versetzt wenigstens eine zweite Stellkammer gebildet. Die zweite Stellkammer dient der Beaufschlagung der Stellstruktur mit einem in die erste Stellrichtung oder in die zweite Stellrichtung wirkenden Stelldruck eines Stellfluids. Die Stellstruktur weißt am äußeren Umfang eine zweite Druckstellfläche auf, welche eine bewegbare Begrenzungswand der zweiten Stellkammer bildet. Die Beaufschlagung der zweiten Stellkammer, insbesondere die Beaufschlagung der zweiten Druckstellfläche, mit einem Stelldruck eines Stellfluids, erzeugt eine auf die Stellstruktur in die erste Stellrichtung wirkende oder eine auf die Stellstruktur in die zweite Stellrichtung wirkende resultierende zweite Stellkraft. Die in der zweiten Stellkammer durch den Stelldruck des Stellfluids erzeugte zweite Stellkraft kann der in der ersten Stellkammer durch den Stelldruck des Stellfluids erzeugten ersten Stellkraft entgegenwirken. Die erste Stellkraft und die zweite Stellkraft können stattdessen aber auch zumindest im Wesentlichen in die gleiche Richtung wirken. In bevorzugten Ausführungen wirken die erste Stellkraft und die zweite Stellkraft in die zweite Stellrichtung.

Die erste Stellkammer und/oder die zweite Stellkammer kann oder können jeweils permanent mit einem Stelldruck beaufschlagt sein. In bevorzugten Ausführungen ist wenigstens eine dieser Stellkammern über ein Steuerventil ansteuerbar, d.h. wahlweise mit Druck beaufschlagbar oder im Druck entlastbar. Bevorzugterweise ist die zweite Stellkammer, falls vorhanden, über ein Steuerventil ansteuerbar und dadurch in Abhängigkeit von der Stellung des Steuerventils mit einem Stelldruck eines Stellfluids beaufschlagbar.

Die erste Stellkammer und die zweite Stellkammer sind in Umfangsrichtung der Stellstruktur mit Versatz nebeneinander angeordnet, vorzugsweise direkt nebeneinander. Die erste Stellkammer und die zweite Stellkammer werden in Umfangsrichtung der Stellstruktur durch eine Gleitfläche getrennt. In bevorzugten Ausführungen sind die erste Stellkammer und die zweite Stellkammer durch eine Dichtung, welche vorzugsweise in einer Ausnehmung am Außenumfang der Stellstruktur aufgenommen ist, voneinander getrennt.

Das für die Druckbeaufschlagung der ersten Stellkammer und/oder für die Druckbeaufschlagung der zweiten Stellkammer verwendete Stellfluid wird vorzugsweise von der Hochdruckseite der Rotationspumpe, beispielsweise noch stromauf des Gehäuseauslasses im Gehäuse abgezweigt. Das Fluid wird über Fluidleitungen der ersten Stellkammer und/oder der zweiten Stellkammer zugeführt, wobei in den Fluidleitungen beispielsweise Steuerventile oder Einrichtungen zur Drosselung des Fluiddrucks angeordnet sein können. Die erste Stellkammer und die zweite Stellkammer, falls letztere vorhanden ist, sind vorzugsweise nicht direkt fluidkommunizierend miteinander verbunden, das heißt vorzugsweise fließt kein Stellfluid von der ersten Stellkammer direkt in die zweite Stellkammer und kein Stellfluid von der zweiten Stellkammer in die erste Stellkammer.

Bedingt durch die Entnahme des Stellfluids von der Hochdruckseite der Rotationspumpe ändert sich die in der ersten Stellkammer durch den Stelldruck erzeugte Stellkraft bei Druckbeaufschlagung der ersten Stellkammer. Ebenso ändert sich die in der zweiten Stellkammer, falls vorhanden, durch den Stelldruck erzeugte Stellkraft bei Druckbeaufschlagung der zweiten Stellkammer mit der Drehzahl der Rotationspumpe. Mit anderen Worten: eine hohe Drehzahl der Rotationspumpe hat einen hohen Fluiddruck auf der Hochdruckseite der Rotationspumpe zur Folge, woraus eine in der ersten Stellkammer erzeugte große erste Stellkraft und ebenfalls eine in der zweiten Stellkammer, falls vorhanden, erzeugte große zweite Stellkraft resultiert/resultieren. Die erste Stellkraft und die zweite Stellkraft wirken dabei vorzugsweise in die zweite Stellrichtung, in Richtung einer Verringerung des spezifischen Fördervolumens. Die in der ersten Stellkammer erzeugte Stellkraft steht dabei in Abhängigkeit zu der Förderleistung der Rotationspumpe, wobei eine hohe Förderleistung eine hohe Stellkraft bewirkt. In gleichem Maße steht die Stellkraft bei Druckbeaufschlagung der zweiten Stellkammer in Abhängigkeit zu der Förderleistung der Rotationspumpe, wobei eine hohe Förderleistung eine hohe Stellkraft bewirkt. Die in der ersten Stellkammer erzeugte Stellkraft wirkt in bevorzugten Ausführungen permanent auf die Stellstruktur, wobei die in der optionalen zweiten Stellkammer erzeugte Stellkraft vorzugsweise über ein Steuerventil regelbar ist.

Zu der einen oder den mehreren Stellkammern ist in Umfangsrichtung der Außenumfangsfläche der Stellstruktur versetzt wenigstens eine Rückstellkammer gebildet. Die Rückstellkammer dient der Erzeugung einer auf die Außenumfangsfläche der Stellstruktur wirkenden Rückstellkraft in die erste Stellrichtung oder in die zweite Stellrichtung. In bevorzugten Ausführungen wirkt die Rückstellkraft der ersten Stellkraft und/oder der zweiten Stellkraft entgegen. Bevorzugterweise wirkt die Rückstellkraft in Richtung einer Erhöhung des Fördervolumens, d.h. in die erste Stellrichtung, und die erste Stellkraft und die optionale zweite Stellkraft wirkt oder wirken in Richtung einer Reduzierung des Fördervolumens, d.h. in zweite Stellrichtung.

Die Rückstellkraft kann durch ein Rückstellelement und/oder durch Druckbeaufschlagung der Rückstellkammer mit einem Stellfluid erzeugt werden. Vorzugsweise befindet sich in der Rückstellkammer ein Rückstellelement, vorzugsweise eine Rückstellfeder, welches eine auf die Stellstruktur wirkende Rückstellkraft erzeugt. Die durch das Rückstellelement erzeugte Rückstellkraft wirkt vorzugsweise permanent auf die Stellstruktur. In bevorzugten Ausführungen wirkt die Rückstellkraft in die erste Stellrichtung. Es ist auch vorstellbar, die Rückstellkammer mit einem in die erste Stellrichtung oder in die zweite Stellrichtung wirkenden Stelldruck eines Stellfluids, wie es insbesondere in der ersten und/oder in der optionalen zweiten Stellkammer zur Anwendung kommen kann, ausschließlich oder zusätzlich zu dem Rückstellelement zu beaufschlagen. Auf diese Weise kann das Rückstellelement durch eine zusätzliche Rückstellkraft unterstützt werden, wobei die zusätzliche Rückstellkraft auf ähnliche Art und Weise wie die Stellkraft von der Drehzahl der Pumpe abhängt.

Die Rückstellkammer kann als separate Kammer ausgestaltet sein, in bevorzugten Ausführungen ist die Rückstellkammer ein Teil des Niederdruckraums oder zumindest mit dem Niederdruckraum verbindbar. "Verbindbar" bedeutet, dass sich die Rückstellkammer mit dem Niederdruckraum fluidkommunizierend verbinden lässt oder permanent mit dem Niederdruckraum fluidkommunizierend verbunden ist. In bevorzugten Ausführungen ist die optionale Rückstellkammer permanent fluidkommunizierend mit dem Niederdruckraum, beispielsweise über eine Ausnehmung in der Stellstruktur, und/oder über eine Saugniere mit der Niederdruckseite der Förderkammer verbunden.

Der Hochdruckraum ist mit der Förderkammer fluidkommunizierend verbunden, nämlich mit der Hochdruckseite der Förderkammer. In bevorzugten Ausführungen ist der Hochdruckraum permanent fluidkommunizierend mit der Förderkammer verbunden. Die Fluidverbindung zwischen Förderkammer und Hochdruckraum kann durch eine stirnseitige Ausnehmung und/oder durch einen Durchbruch in der Stellstruktur gebildet sein und/oder durch eine Ausnehmung des Gehäuses. Bevorzugt wird die Fluidverbindung durch eine Ausnehmung oder einen Durchbruch in der Stellstruktur gebildet. In besonders bevorzugten Ausführungen handelt es sich bei dieser Ausnehmung in der Stellstruktur um den Förderkammerauslass. Zusätzlich zu der Ausnehmung in der Stellstruktur kann der Hochdruckraum über eine Druckniere des Förderkammerauslasses mit der Förderkammer verbunden sein. Die Druckniere und die Ausnehmung in der Stellstruktur sind bevorzugt auf axial gegenüberliegenden Seiten der Stellstruktur ausgebildet, so dass die Stellstruktur axial beidseitig von dem aus der Förderkammer abströmenden Fluid umströmt wird.

Vorzugsweise strömt ein überwiegender Teil des Fluids, das aus der Förderkammer durch den Förderkammerauslass abströmt, in den Hochdruckraum, insbesondere direkt in den Hochdruckraum, und strömt aus dem Hochdruckraum über den Gehäuseauslass aus dem Pumpengehäuse ab. Hierbei kann es sich vorteilhafterweise um den überwiegenden Teil des von der Pumpe insgesamt geförderten Fluids handeln. Der Hochdruckraum bildet einen Vorraum des Gehäuseauslasses. Der Hochdruckraum ist stromab des Förderkammerauslasses und stromauf des Gehäuseauslasses im Gehäuse ausgebildet. Ein Teil der Außenumfangsfläche der Stellstruktur bildet eine bewegbare Begrenzungswand des Hochdruckraums.

Neben äußeren Kräften wirken auf die Stellstruktur auch innere Kräfte. Diese inneren Kräfte werden durch den auf die innere Kontur der Stellstruktur wirkenden Fluiddruck des in der Förderkammer befindlichen Fluids erzeugt. Da die innere Kraft von den in der Förderkammer herrschenden Druckverhältnissen abhängt und diese von der Drehzahl der Pumpe mitbestimmt werden, ist die innere Kraft proportional zu der Drehzahl der Pumpe wenn man Stellbewegungen der Stellstruktur außer Acht lässt oder die Stellstruktur fixiert. Bei einer hohen Drehzahl ist die resultierende innere Kraft entsprechend größer als bei einer vergleichsweise niedrigeren Drehzahl. Die auf die Stellstruktur wirkenden inneren Kräfte sind auf der Hochdruckseite der Förderkammer größer als die inneren Kräfte auf der Niederdruckseite der Förderkammer. Rechnet man die Kräfte entlang der Innenkontur der Stellstruktur auf, erhält man eine resultierende innere Kraft, welche auf der Hochdruckseite der Förderkammer, insbesondere im Bereich des Förderkammerauslasses, nach radial außen gerichtet ist.

In Abhängigkeit von den Druckverhältnissen in der Förderkammer kann die resultierende innere Kraft beispielsweise in Richtung entgegen oder in Richtung mit dem Rückstellelement wirken. Je nach Wirkrichtung der resultierenden inneren Kraft kann dies zu einem ungewollten Regelverhalten der Pumpe führen. Entsprechend der Wirkrichtung der inneren Kraft kann die Pumpe beispielsweise frühzeitig und ungewollt abregeln, oder der für eine Abregelung benötigte Stelldruck wird um den Betrag der inneren Kraft erhöht, was zu einer verzögerten Abregelung der Pumpe führt.

Grundsätzlich lässt sich die resultierende innere Kraft in eine erste Kraftkomponente und eine zur ersten Kraftkomponente orthogonale, zweite Kraftkomponente zerlegen, wobei die erste Kraftkomponente in die erste Stellrichtung oder in die zweite Stellrichtung wirkt. Die erste Kraftkomponente und die zweite Kraftkomponente können unterschiedlich groß sein. Da es während des Pumpenbetriebs, beispielsweise bei einem Lastwechsel, neben temporären Druckschwankungen auch zu lokalen Druckschwankungen innerhalb der Förderkammer kommen kann, kann das Verhältnis zwischen der ersten Kraftkomponente und der zweiten Kraftkomponente variieren. Für den Fall, dass eines aus erster Kraftkomponente und zweiter Kraftkomponente den Betrag Null hat, entspricht die resultierende innere Kraft der jeweils anderen Kraftkomponente. Somit kann die innere Kraft beispielsweise der ersten Kraftkomponente entsprechen.

Bevorzugt ist die erste Kraftkomponente größer als die zweite Kraftkomponente. Es ist aber auch denkbar, dass die zweite Kraftkomponente, abhängig von der Anordnung der Hochdruckseite und der Niederdruckseite der Förderkammer, größer ist als die erste Kraftkomponente. Grundsätzlich hat die innere Kraft immer eine erste Kraftkomponente, welche in die erste Stellrichtung oder in die zweite Stellrichtung wirkt, wobei die erste Kraftkomponente von Betrag auch Null sein kann. In bevorzugten Ausführungen wirkt die erste Kraftkomponente in die zweite Stellrichtung. Da die Stellstruktur in die erste und in die zweite Stellrichtung bevorzugt linear hin und her beweglich und orthogonal zu den Stellrichtungen unbeweglich ist, wird die zweite Kraftkomponente von der Lagerung der Stellstruktur kompensiert. Hat die innere Kraft eine zweite Kraftkomponente größer Null und übt der Druck im Hochdruckraum auf die Stellstruktur eine Querkraft aus, so ist der Hochdruckraum in vorteilhaften Ausführungen relativ zur Stellstruktur so angeordnet, dass die vom Druck im Hochdruckraum auf die Stellstruktur ausgeübte Querkraft der zweiten Kraftkomponente der inneren Kraft entgegenwirkt.

Eine resultierende innere Kraft bzw. eine erste Kraftkomponente in die erste Stellrichtung, das heißt in Rückstellrichtung, bedeutet, dass die Kraft, welche zur Abregelung der Pumpe aufgebracht werden muss, mit der Drehzahl erhöht wird. Entsprechend erhöht eine resultierende innere Kraft bzw. eine erste Kraftkomponente in die zweite Stellrichtung, das heißt entgegen der Rückstellrichtung, das Risiko, dass die Pumpe ungewollt abregelt. In bevorzugten Ausführungen ist die Hochdruckseite der Förderkammer, insbesondere der Förderkammerauslass, derart angeordnet, dass die erste Kraftkomponente in die zweite Stellrichtung und somit einem optionalen Rückstellelement entgegenwirkt. In besonders bevorzugten Ausführungen ist die Hochdruckseite, insbesondere der Förderkammerauslass, derart angeordnet, dass die erste Kraftkomponente in die zweite Stellrichtung wirkt und die zweite Kraftkomponente gleich Null ist. Die resultierende innere Kraft, genauer die erste Kraftkomponente der resultierenden inneren Kraft, bewirkt in derartigen Ausführungen eine Abregelung der Rotationspumpe.

Um dem ungewollten Abregeln der Pumpe entgegenzuwirken und die resultierende innere Kraft zu kompensieren, umfasst der Hochdruckraum eine Druckausgleichsfläche. Die Druckausgleichsfläche entspricht der im Hochdruckraum befindlichen Außenumfangsfläche der Stellstruktur. Die Druckausgleichsfläche ist ein Teil der Außenumfangsfläche der Stellstruktur. Die Stellstruktur weist an ihrem Außenumfang im Hochdruckraum eine Druckflächenasymmetrie auf, wodurch eine effektive Druckausgleichsfläche erhalten wird. Die Druckausgleichsfläche der Stellstruktur bildet eine bewegbare Wand des Hochdruckraums.

Die Druckausgleichsfläche kann mehrere Druckflächen umfassen, d.h. die Druckausgleichsfläche kann wenigstens einen Wendepunkt aufweisen. Somit kann die Druckausgleichsfläche in Umfangsrichtung der Stellstruktur beispielsweise gewellt oder geriffelt sein.

In mathematischer Betrachtung wird die Druckausgleichsfläche durch ihren Normalenvektor repräsentiert. Der Normalenvektor setzt sich aus einer zur ersten und zweiten Stellrichtung parallelen Stellrichtungskomponente, einer quer zu den Stellrichtungen weisenden Querkomponente und einer zur Drehachse des Förderrotors parallelen Axialkomponente zusammen. Die Axialkomponente wird bei zylindrischem Außenumfang der Stellstruktur zu Null und kann anderenfalls in Bezug auf die Erfindung vernachlässigt werden. Die Erfindung gestaltet die Druckausgleichsfläche so, dass die Stellrichtungskomponente des Normalenvektors in Richtung der durch die Druckverhältnisse in der Förderkammer auf die Stellstruktur wirkenden inneren Kraft weist. Der im Hochdruckraum herrschende Druck wirkt der inneren Kraft daher entgegen und erzeugt daher die der inneren Kraft entgegen gerichtete äußere Zusatzkraft. Der Betrag der Stellrichtungskomponente des Normalenvektors entspricht der Größe der effektiven Druckausgleichsfläche.

Die Druckflächenasymmetrie der Druckausgleichsfläche ergibt sich aus einem Versatz der ersten Gleitfläche und der zweiten Gleitfläche quer, vorzugsweise orthogonal, zur ersten und zweiten Stellrichtung . In bevorzugten Ausführungen, in denen die Stellstruktur im Gehäuse in die erste und zweite Stellrichtung hin und her linear beweglich gelagert ist, sind die erste Gleitfläche und die zweite Gleitfläche orthogonal zur ersten und zweiten Stellrichtung parallel zueinander versetzt. Verlängert man die beiden Gleitflächen der linear beweglichen Stellstruktur gedanklich in die erste Stellrichtung und die zweite Stellrichtung, bildet die von diesen Parallelen eingefasste Druckausgleichsfläche die effektive Druckausgleichsfläche. Die effektive Druckausgleichsfläche ist der Teil der Druckausgleichsfläche, welcher der Erzeugung der äußere Zusatzkraft dient. Dabei ist die effektive Druckausgleichsfläche ein Teil der Außenumfangsfläche der Stellstruktur. Die effektive Druckausgleichsfläche entspricht dabei der Projektion der Druckausgleichsfläche in die erste oder die zweite Stellrichtung. Die orthogonal zur Drehachse gemessene Breite der effektiven Druckausgleichsfläche wird durch den Querversatz der Gleitflächen bestimmt.

Die effektive Druckausgleichsfläche lässt sich auch aus der Differenz der Projektionen der einzelnen Druckteilflächen der Druckausgleichsfläche in die erste Stellrichtung und der Projektionen der einzelnen Druckteilflächen der Druckausgleichsfläche in die zweite Stellrichtung errechnen. Dabei werden alle Druckteilflächen, deren Normalenvektor eine Komponente in Richtung der ersten Stellrichtung hat, in die zweite Stellrichtung projiziert und alle Druckteilflächen, deren Normalenvektor eine Komponente in Richtung der zweiten Stellrichtung hat, in die erste Stellrichtung projiziert. Die Summe der Projektionen in die erste Stellrichtung ergibt eine erste Druckfläche und die Summe der Projektionen in die zweite Stellrichtung ergibt eine zweite Druckfläche. Die Differenz zwischen der ersten Druckfläche und der zweiten Druckfläche multipliziert mit der axialen Länge der Druckausgleichsfläche ist die effektive Druckausgleichsfläche. In bevorzugten Ausführungen ist die erste Druckfläche größer als die zweite Druckfläche, es ist aber auch denkbar, dass die zweite Druckfläche größer als die erste Druckfläche ist.

Im Hochdruckraum wirkt über die Druckausgleichsfläche eine durch den Fluiddruck im Hochdruckraum erzeugte, in die erste oder stattdessen in die zweite Stellrichtung äußere Kraft. Für den Fall, dass die Druckausgleichsfläche einen Kreisbogen beschreibt, dessen Mittelpunkt mit dem Mittelpunkt der Stellstruktur zusammenfällt, wirken die äußeren Kräfte radial nach innen auf den Mittelpunkt der Stellstruktur. Rechnet man die Kräfte entlang der Druckausgleichsfläche auf, erhält man eine resultierende äußere Kraft. Die resultierende äußere Kraft lässt sich in eine erste äußere Kraftkomponente und eine auf die äußere erste Kraftkomponente senkrecht stehende, zweite äußere Kraftkomponente zerlegen, wobei die äußere erste Kraftkomponente in die erste Stellrichtung oder in die zweite Stellrichtung wirkt. Der auf die erste Druckteilfläche wirkende Fluiddruck im Hochdruckraum erzeugt dabei eine äußere erste Kraftkomponente in Richtung der ersten Stellrichtung, während der auf die zweite Druckteilfläche wirkende Fluiddruck im Hochdruckraum eine äußere erste Kraftkomponente in die zweite Stellrichtung erzeugt, wobei der auf die erste Druckfläche und auf die zweite Druckfläche wirkende Fluiddruck gleich groß ist. Die Flächendifferenz der ersten Drucktfläche und der zweiten Druckfläche bewirkt eine äußere Zusatzkraft. Die äußere Zusatzkraft entspricht der resultierenden äußeren Kraft, welche der auf die Druckausgleichsfläche wirkende Fluiddruck im Hochdruckraum erzeugt. Die äußere Zusatzkraft ist das Produkt des im Hochdruckraum herrschenden Fluiddrucks und der effektiven Druckausgleichsfläche.

In bevorzugten Ausführungen ist die effektive Druckausgleichsfläche so bemessen, dass das Fluid, welches aus der Förderkammer bevorzugt über die Stellstruktur in den Hochdruckraum gelangt, eine äußere Zusatzkraft bewirkt, welche vom Betrag her zumindest im Wesentlichen so groß wie die erste Kraftkomponente der inneren Kraft ist. Die äußere Zusatzkraft wirkt bevorzugt in die entgegengesetzte Richtung zu der ersten Kraftkomponente der resultierenden inneren Kraft. In besonders bevorzugten Ausführungen kompensiert die äußere Zusatzkraft die erste Kraftkomponente der inneren Kraft. Die äußere Zusatzkraft ist in den bevorzugten Ausführungen somit eine der inneren Kraft entgegenwirkende Ausgleichskraft. Wirkt die erste Kraftkomponente der inneren Kraft beispielsweise in die zweite Stellrichtung, so wirkt die äußere Zusatzkraft in die erste Stellrichtung. Bevorzugterweise wirkt die äußere Zusatzkraft in dieselbe Richtung wie das Rückstellelement. Die Wirkrichtung der mit Fluiddruck beaufschlagten effektiven Druckausgleichsfläche ist der Wirkrichtung der mit Fluiddruck beaufschlagten Druckstellfläche der ersten Stellkammer und/oder der mit Fluiddruck beaufschlagten Druckstellfläche der zweiten Stellkammer, falls eine solche verwirklicht ist, in derartigen Ausführungen entgegengesetzt.

Die Druckausgleichsfläche erstreckt sich in Umfangsrichtung vom ersten Dichtspalt bis zum zweiten Dichtspalt, wie unten beschrieben, und kann sich auch am Außenumfang der Stellstruktur insbesondere über einen Umfangsbereich erstrecken, der zwischen einem Umfangsflächenbereich der Stellstruktur auf der Niederdruckseite der Pumpe und der Stellkammer erstreckt. Weist die Pumpe mehrere am Außenumfang der Stellstruktur gelegene Stellkammern auf, erstreckt sich die Druckausgleichsfläche vorteilhafterweise zwischen einem auf der Niederdruckseite liegenden Umfangsbereich der Stellstruktur und den mehreren Stellkammern. Weist die Pumpe das genannte Rückstellelement auf, erstreckt sich die Druckausgleichsfläche am Außenumfang der Stellstruktur vorteilhafterweise zwischen dem Rückstellelement und der Stellkammer oder den optional mehreren Stellkammern.

In bevorzugten Ausführungen ist die effektive Druckausgleichsfläche am Außenumfang der Stellstruktur im Bereich des Förderkammerauslasses angeordnet. Sie kann aber auch in Umfangsrichtung versetzt zu dem Förderkammerauslass am Außenumfang der Stellstruktur angeordnet sein. Die effektive Druckausgleichsfläche ist vorzugsweise kleiner als die Stellfläche, welche durch die Außenumfangsfläche der Stellstruktur in der ersten Stellkammer und/oder der optionalen zweiten Stellkammer gebildet wird. Die Größe der Druckausgleichsfläche beträgt in vorteilhaften Ausführungen maximal 20% oder maximal 10% der Stellfläche der ersten Stellkammer oder der optimalen zweiten Stellkammer. In bevorzugten Ausführungen beträgt die Größe der effektiven Druckausgleichsfläche maximal 7% der jeweiligen Stellfläche.

Die Erfindung wird nachfolgend anhand von Ausführungsbeispielen erläutert. An den Ausführungsbeispielen offenbarte Merkmale bilden die Gegenstände der Ansprüche, und auch die vorstehend erläuterten Ausgestaltungen vorteilhaft weiter. Es zeigen:
- Figur 1: eine Rotationspumpe mit verstellbarem Fördervolumen und einer Druckausgleichsfläche, und
- Figur 2: das Wirkprinzip der Druckausgleichsfläche.

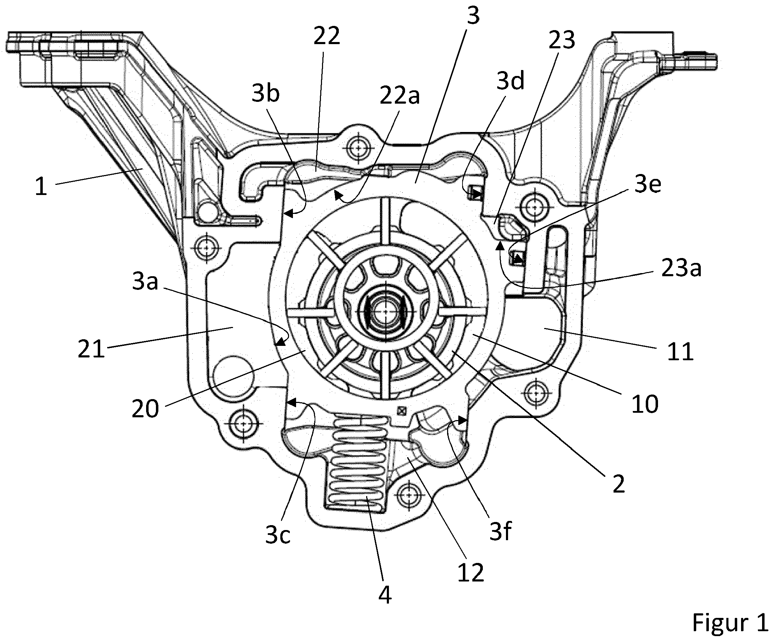

Figur 1 zeigt eine Rotationspumpe mit verstellbarem Fördervolumen. Bei der Rotationspumpe handelt es sich um eine Flügelzellenpumpe. Die Rotationspumpe umfasst ein Gehäuse 1 mit einem Gehäuseeinlass und einem Gehäuseauslass für ein Fluid, beispielsweise Schmieröl oder Getriebeöl. Die Rotationspumpe umfasst ferner einen Förderrotor mit einem in der Förderkammer drehbarem Rotor 2 und vom Rotor 2 verschiebbar geführten Flügeln. Die Flügel stützen sich radial außen an einer Innenkontur einer Stellstruktur 3 ab und unterteilen die Förderkammer in mehrere Förderzellen. Die Stellstruktur 3 begrenzt die Förderkammer radial nach außen und dient der Verstellung des Fördervolumens.

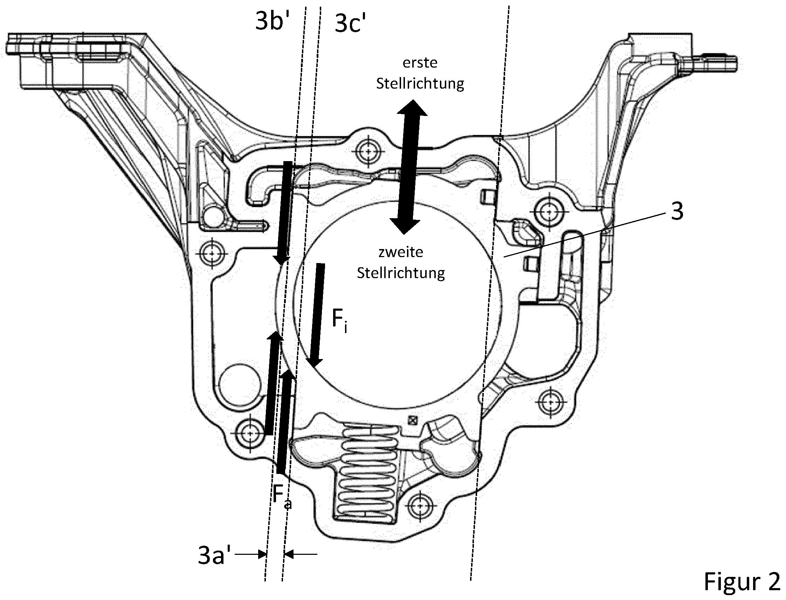

Die Stellstruktur 3 ist in eine erste Stellrichtung und eine zweite Stellrichtung hin und her beweglich gelagert, beispielhaft ist sie linear beweglich gelagert. Die erste Stellrichtung und die zweite Stellrichtung sind in Figur 2 durch einen Doppelpfeil im oberen Bildbereich angedeutet. Die Stellstruktur 3 weist an ihrem Außenumfang eine erste Gleitfläche 3b, eine zweite Gleitfläche 3c, eine dritte Gleitfläche 3d, eine vierte Gleitfläche 3e und eine fünfte Gleitfläche 3f auf. Die Gleitflächen 3b-f sind Teil der Außenumfangsfläche der Stellstruktur 3. Sie können unmittelbar von der Stellstruktur 3 oder von Dichtelementen gebildet werden, die an den entsprechenden Stellen am Außenumfang der Stellstruktur 3 und/oder in den Gegenflächen des Gehäuses 1 angeordnet sind. Die Gleitflächen 3b-f erstrecken sich parallel zur ersten Stellrichtung und zweiten Stellrichtung. Das Gehäuse 1 führt die Stellstruktur 3 im Bereich der Gleitflächen 3b-f in einem Führungsgleitkontakt. Die erste Stellrichtung und die zweite Stellrichtung werden durch die Gleitflächen 3b-e im Führungsgleitkontakt bestimmt.

Im Gehäuse 1 sind eine erste Stellkammer 22 und eine zweite Stellkammer 23 gebildet. Die erste Stellkammer 22 und die zweite Stellkammer 23 sind mit Druck beaufschlagbar, wobei die erste Stellkammer 22 permanent mit der Hochdruckseite der Rotationspumpe fluidkommunizierend verbunden ist, während die zweite Stellkammer 23 über ein Steuerventil fluidkommunizierend wahlweise mit der Hochdruckseite oder der Niederdruckseite der Rotationspumpe verbindbar ist. Der in der ersten Stellkammer 22 herrschende Stelldruck wirkt auf die Stellstruktur 3 in die Stellrichtung. Der auf die Stellfläche 22a wirkende Stelldruck erzeugt eine Stellkraft in die Stellrichtung. Die Stellfläche 22a ist Teil der Außenumfangsfläche der Stellstruktur 3 und bildet eine bewegbare Wand der ersten Stellkammer 22. Der Stellkraft entgegen wirkt eine Rückstellkraft in eine Rückstellrichtung. Die Rückstellkraft wird durch ein auf die Stellstruktur 3 wirkendes Rückstellelement 4, beispielsweise eine Rückstellfeder, erzeugt. Das Rückstellelement 4 wirkt dabei in Richtung auf Vergrößerung des Fördervolumens.

Das Rückstellelement 4 ist in einer Rückstellkammer 12 angeordnet, welche vorzugsweise Teil der Niederdruckseite der Pumpe, genauer gesagt eines Niederdruckraums 11 des Gehäuses 1 ist. Der Niederdruckraum 11 ist mit dem Gehäuseeinlass fluidisch permanent verbunden. Der Niederdruckraum 11 wird in eine Umfangsrichtung durch den zwischen dem Gehäuse 1 und der Stellstruktur 3 im Bereich der Gleitfläche 3e gebildeten Dichtspalt fluidisch von der zweiten Stellkammer 23 getrennt. In die andere Umfangsrichtung erstreckt sich der Niederdruckraum 11 bis zu dem im Bereich der zweiten Gleitfläche 3c gebildeten Dichtspalt. Die Rückstellkammer 12 ist an den Niederdruckraum 11 angeschlossen und somit Teil des Niederdruckraums 11. Der im Bereich der zweiten Gleitfläche 3c gebildete Dichtspalt trennt den Hochdruckraum 21 von der Rückstellkammer 12 und somit vom Niederdruckraum 11 des Gehäuses 1. In Modifikationen kann die Rückstellkammer 12 permanent mit der Hochdruckseite der Pumpe verbunden sein oder wahlweise mit der Hochdruckseite der Pumpe verbunden und von dieser getrennt werden, um das Rückstellelement 12 zu entlasten und/oder zusätzliche Möglichkeiten der Verstellung des spezifischen Fördervolumens zu eröffnen.

Bei einem Kräftegleichgewicht der Rückstellkraft und der Stellkraft, wird die Stellstruktur 3 nicht bewegt. Ist die Rückstellkraft größer als die Stellkraft, wird die Stellstruktur 3 in die Rückstellrichtung bewegt. Die Rückstelleinrichtung wird im Folgenden als "erste Stellrichtung" bezeichnet. Die Stellrichtung, in die der in der ersten Stellkammer 22 herrschende Druck auf die Stellstruktur 3 wirkt, wird im Folgenden als "zweite Stellrichtung" bezeichnet. Für den Fall, dass die Stellkraft größer als die Rückstellkraft ist, wird die Stellstruktur 3 gegen die Rückstellkraft des Rückstellelements 4 in die zweite Stellrichtung bewegt und das Fördervolumen verringert, d. h. die Pumpe wird abgeregelt.

Wird die zweite Stellkammer 23 über das Steuerventil mit Fluid von der Hochdruckseite der Pumpe beaufschlagt, wirkt das Fluid auf die Stellfläche 23a, welche eine bewegbare Wand der zweiten Stellkammer 23 bildet, und erzeugt eine Stellkraft ebenfalls in die zweite Stellrichtung. Die erste Stellkammer 22 und die zweite Stellkammer 23 sind in Umfangsrichtung der Stellstruktur 3 nebeneinander angeordnet und durch den zwischen Gehäuse 1 und Stellstruktur 3 im Bereich der dritten Gleitfläche 3d gebildeten Dichtspalt fluidisch voneinander getrennt. Die Stellkammern 22 und 23 können, wie im Ausführungsbeispiel, insbesondere direkt nebeneinander, nur durch den Dichtspalt bei 3d voneinander getrennt, angeordnet sein.

Die Rotationspumpe weist einen Hochdruckraum 21 auf. Der Hochdruckraum 21 ist mit der Förderkammer über den Förderkammerauslass 20 fluidkommunizierend verbunden. Wenngleich es bevorzugt ist, dass der Förderkammerauslass 20 durch eine Druckniere im Gehäuse 1 und einer, auf der der Druckniere gegenüberliegenden Seite der Stellstruktur 3 liegenden, Ausnehmung in der Stellstruktur 3 gebildet ist, ist der Förderkammerauslass 20 in den Figuren 1 und 2 nur als Druckniere im Gehäuse dargestellt. Das soeben erläuterte gilt sinngemäß auch für den Förderkammereinlass 10. Der Hochdruckraum 21 ist von der Förderkammer wie bevorzugt nur durch die Stellstruktur 3 getrennt und bildet einen Vorraum zu dem Gehäuseauslass der Pumpe (nicht dargestellt).

Der Hochdruckraum 21 verbindet die Hochdruckseite der Förderkammer mit dem Gehäuseauslass. Im Pumpenbetrieb wird zumindest ein Teil des Fluids auf der Hochdruckseite der Pumpe über den Hochdruckraum 21 abgefördert. Bevorzugt wird zumindest der überwiegende Teil des Fluids über den Hochdruckraum 21 abgefördert. Besonders bevorzugt ist der Förderkammerauslass nur über den Hochdruckraum 21 mit dem Gehäuseauslass verbunden, so dass im Pumpenbetrieb der gesamte Förderstrom über den Hochdruckraum 21 abgefördert wird.

Der Hochdruckraum 21 wird unter anderem durch eine Druckausgleichsfläche 3a begrenzt. Die Druckausgleichsfläche 3a ist ein Umfangsabschnitt der Außenumfangsfläche der Stellstruktur 3 und bildet eine bewegbare Wand des Hochdruckraums 21. Die Druckausgleichsfläche 3a weist eine Druckflächenasymmetrie innerhalb des Hochdruckraums 21 auf. Die Druckflächenasymmetrie entsteht durch einen Versatz, den die Gleitflächen 3b und 3c relativ zueinander in eine Richtung quer zur ersten und zweiten Stellrichtung der Stellstruktur 3 haben. Die Gleitflächen 3b und 3c sind beispielhaft in Form von auskragenden Absätzen der Stellstruktur 3 gebildet. Durch den Querversatz wird die Druckausgleichsfläche 3a mit einer Asymmetrie bezüglich der ersten und zweiten Stellrichtung erhalten. Die Druckausgleichsfläche 3a weist in Bezug auf die erste und zweite Stellrichtung eine verbleibende Differenzfläche auf, die im Folgenden als effektive Druckausgleichsfläche 3a' (Fig. 2) bezeichnet wird. Die effektive Druckausgleichsfläche 3a' liegt in Umfangsrichtung gesehen zwischen den Gleitflächen 3b und 3c. Wie bevorzugt begrenzen die Gleitflächen 3b und 3c die Druckausgleichsfläche 3a und somit deren effektive Druckausgleichsfläche 3a' in Umfangsrichtung. Der im Hochdruckraum 21 herrschende Druck erzeugt der Größe des Querversatzes und damit einhergehend der Größe der Differenzfläche bzw. effektiven Druckausgleichsfläche 3a' entsprechend eine in die erste Stellrichtung auf die Stellstruktur 3 wirkende Stellkraft.

Im Ausführungsbeispiel ist die Stellstruktur 3 weitgehend kreisförmig. Mit den Gleitflächen 3b und 3c sind auch die auskragenden Absätze quer zueinander versetzt. Die Außenumfangsfläche der Stellstruktur 3 beschreibt im Hochdruckraum 21 in Umfangsrichtung zwischen den Gleitflächen 3b und 3c einen Kreisbogen, welcher die Ausgleichsfläche 3a aufweist. Der Kreisbogenverlauf zwischen den Gleitflächen 3h und 3k ist jedoch nur ein Beispiel für diesen Außenumfangsabschnitt der Stellstruktur 3.

Verlängert man die Gleitflächen 3b und 3c (vgl. Fig.2) gedanklich in die erste Stellrichtung und die zweite Stellrichtung, ergibt der von den Parallelen eingefasste Umfangsabschnitt der Stellstruktur 3 die effektive Druckausgleichsfläche 3a'. Die effektive Druckausgleichsfläche 3a' ist die Projektion des eingefassten Umfangsabschnitts, in die erste Stellrichtung. Der Abstand der beiden Parallelen entspricht der quer zur ersten und zweiten Stellrichtung gemessenen Breite der effektiven Druckausgleichsfläche 3a'.

Die Rotationspumpe weist einen Niederdruckraum 11 auf, welcher mit dem Förderkammereinlass 10 und dem Gehäuseeinlass (nicht dargestellt) verbunden ist. Der Niederdruckraum 11 ist bevorzugt mit der Rückstellkammer 12 fluidkommunizierend verbunden, so dass die Rückstellkammer 12 und der Niederdruckraum 11 dasselbe Druckniveau haben.

Das Prinzip der äußere Zusatzkraft Fₐ wird im Folgenden anhand der Figur 2 erläutert. Für eine bessere Übersicht wird in Fig. 2 auf die Darstellung des Rotors und der Flügel verzichtet.

Durch die Druckverhältnisse innerhalb der Förderkammer wird eine innere Kraft erzeugt. Die innere Kraft weist eine Kraftkomponente Fi in die zweite Stellrichtung auf. Die innere Kraft kann auch eine Kraftkomponente orthogonal zur zweiten Stellrichtung haben, in diesem Fall bevorzugt in Richtung auf den Hochdruckraum 21, da hierdurch die durch den Druck im Hochdruckraum 21 auf die Stellstruktur 3 ausgeübte Kraft zumindest teilweise kompensiert wird. Im Folgenden wird die in die zweite Stellrichtung weisende Kraftkomponente als innere Kraft Fi bezeichnet. Falls die innere Kraft auch eine Kraftkomponente quer zur ersten Stellrichtung hat, werden sowohl die aus beiden Kraftkomponenten zusammengesetzte Kraft als auch die in die zweite Stellrichtung wirkende Kraftkomponente als "innere Kraft Fi" bezeichnet. Der im Hochdruckraum 21 herrschende Fluiddruck wirkt auf die Außenumfangsfläche der Stellstruktur 3, d. h. auf die Druckausgleichsfläche 3a. An jedem Punkt der Druckausgleichsfläche 3a entsteht so eine Kraft, welche senkrecht zu der Außenumfangsfläche an diesem Punkt steht. Da für eine ungewollte Veränderung des spezifischen Fördervolumens nur in die erste Stellrichtung und in die zweite Stellrichtung wirkende Kräfte eine Rolle spielen, sind in Fig. 2 nur die Resultierenden dieser Kräfte eingezeichnet.

Wie bereits eingangs beschrieben, sind die beiden Gleitflächen 3b und 3c der Stellstruktur 3 quer zur ersten und zweiten Stellrichtung zueinander versetzt. Verlängert man die Gleitflächen 3b und 3c gedanklich in die erste Stellrichtung und die zweite Stellrichtung, entspricht die Projektion des von den Parallelen 3b' und 3c' eingefassten Umfangsabschnitts der Stellstruktur 3 der effektiven Druckausgleichsfläche 3a'. Der Abstand der beiden Parallelen entspricht dabei der Breite der effektiven Druckausgleichsfläche.

Der auf den Teil der Druckausgleichsfläche 3a, welcher links von der Parallelen 3b' liegt, wirkende Fluiddruck erzeugt Kräfte, deren Kraftkomponenten in die erste Stellrichtung gleich groß wie die Kraftkomponenten in die zweite Stellrichtung sind. Diese Kraftkomponenten kompensieren sich somit gegenseitig. Im Gegensatz dazu erzeugen die Kräfte, die auf den rechts von der Parallelen 3b' liegenden Teil der effektiven Druckausgleichsfläche 3a wirken, eine resultierende Kraft in die erste Stellrichtung. Diese resultierende Kraft ist zur Größe der effektiven Druckausgleichsfläche 3a` proportional und dient der Kompensation der inneren Kraft Fi. Die durch die effektive Druckausgleichsfläche 3a erzeugte resultierende Kraft dient als äußere Zusatzkraft Fa, welche der inneren Kraft Fi entgegengerichtet ist. Die Pumpe und ihre Stellstruktur 3 können insbesondere so ausgelegt sein, dass die innere Kraft Fi und die äußere Zusatzkraft Fa gleich groß sind und sich neutralisieren. Die äußere Zusatzkraft Fa wirkt somit als Ausgleichskraft für die innere Kraft Fi.

## Patentansprüche

1. Rotationspumpe mit verstellbarem spezifischen Fördervolumen, vorzugsweise Flügelpumpe, die Rotationspumpe umfassend:
(a) ein Gehäuse (1) mit einem Gehäuseeinlass und einem mit dem Gehäuseeinlass verbundenen Niederdruckraum (11) auf einer Niederdruckseite der Pumpe und einem Gehäuseauslass und einem mit dem Gehäuseauslass verbundenen Hochdruckraum (21) auf einer Hochdruckseite der Pumpe,
(b) eine Förderkammer, in die auf der Niederdruckseite ein mit dem Niederdruckraum (11) verbundener Förderkammereinlass (10) und in die auf der Hochdruckseite ein mit dem Hochdruckraum (21) verbundener Förderkammerauslass (20) münden,
(c) einen in der Förderkammer um eine Drehachse drehbaren Förderrotor (2),
(d) eine Stellstruktur (3), die zur Ausübung einer das spezifische Fördervolumen der Rotationspumpe verstellenden Stellbewegung in eine erste Stellrichtung und der ersten Stellrichtung entgegen in eine zweite Stellrichtung hin und her beweglich ist, und
(e) wenigstens eine erste Stellkammer (22) zur Beaufschlagung der Stellstruktur (3) mit einem in die zweite Stellrichtung wirkenden Stelldruck eines Stellfluids,
(f) wobei der Fluiddruck im Hochdruckraum (21) auf eine Druckausgleichsfläche (3a) am Außenumfang der Stellstruktur (3) wirkt und die Druckausgleichsfläche (3a) eine Druckflächenasymmetrie aufweist, woraus eine in die erste Stellrichtung auf die Stellstruktur (3) wirkende äußere Zusatzkraft (Fa) resultiert, wobei
(g) die Stellstruktur (3) an ihrem Außenumfang eine erste Gleitfläche (3b) zur Bildung eines ersten Dichtspalts mit dem Gehäuse (1) und eine zweite Gleitfläche (3c) zur Bildung eines zweiten Dichtspalts mit dem Gehäuse (1) aufweist, und
(h) die Gleitflächen (3b, 3c) quer zur ersten und zweiten Stellrichtung relativ zueinander versetzt sind,
**dadurch gekennzeichnet, dass**
(i) die Druckausgleichsfläche (3a) sich in Umfangsrichtung vom ersten Dichtspalt bis zum zweiten Dichtspalt erstreckt,
(j) so dass der Normalenvektor der Druckausgleichsfläche (3a) zur Erzeugung der äußere Zusatzkraft (Fa) gegen die erste Stellrichtung weist.

2. Rotationspumpe nach einem der vorhergehenden Ansprüche, wobei der Hochdruckraum (21) stromab des Förderkammerauslasses (20) und stromauf des Gehäuseauslasses im Gehäuse (1) vorgesehen ist.

3. Rotationspumpe nach einem der vorhergehenden Ansprüche, wobei zumindest ein überwiegender Teil des Fluids, das aus der Förderkammer durch den Förderkammerauslass (20) gefördert wird, vorzugsweise auf direktem Weg, in den Hochdruckraum (21) strömt und aus dem Hochdruckraum (21) zum Gehäuseauslass abströmt, so dass zumindest der überwiegende Teil des Fluids, vorzugsweise das gesamte Fluid, aus der Förderkammer über den Hochdruckraum (21) aus der Pumpe abströmen kann.

4. Rotationspumpe nach einem der vorhergehenden Ansprüche, wobei der Normalenvektor der Druckausgleichsfläche (3a) parallel zu den Stellrichtungen insgesamt eine Stellrichtungskomponente größer Null und quer zu den Stellrichtungen insgesamt eine Querkomponente aufweist und die Querkomponente mehr als dreimal oder mehr als fünfmal oder mehr als zehnmal so groß wie die Stellrichtungskomponente ist.

5. Rotationspumpe nach einem der vorhergehenden Ansprüche, wobei der Hochdruckraum (21) mit der Förderkammer über die Stellstruktur (3) fluidkommunizierend verbunden ist.

6. Rotationspumpe nach einem der vorhergehenden Ansprüche, wobei die Druckausgleichsfläche (3a) eine bewegbare Begrenzungswand des Hochdruckraums (21) ist und ein im Hochdruckraum (21) herrschender Druck über die Druckausgleichsfläche (3a) auf die Stellstruktur (3), vorzugsweise gegen die erste Stellkammer (22), wirkt.

7. Rotationspumpe nach einem der vorhergehenden Ansprüche, wobei ein Rückstellelement (4), vorzugsweise eine Feder, eine in die erste Stellrichtung wirkende Federkraft auf die Stellstruktur (3) ausübt.

8. Rotationspumpe nach einem der vorhergehenden Ansprüche, wobei die Stellbewegung der Stellstruktur (3) in die erste Stellrichtung eine Erhöhung des spezifischen Fördervolumens und die Stellbewegung der Stellstruktur (3) in die zweite Stellrichtung eine Reduzierung des spezifischen Fördervolumens bewirken.

9. Rotationspumpe nach einem der vorhergehenden Ansprüche, wobei das in der Förderkammer befindliche Fluid eine resultierende innere Kraft (Fi) auf die Stellstruktur (3) ausübt, die in eine der Stellrichtungen, beispielsweise in die zweite Stellrichtung, wirkt.

10. Rotationspumpe nach einem der vorhergehenden Ansprüche, wobei die Stellstruktur (3) in die erste Stellrichtung und in die zweite Stellrichtung linear hin und her beweglich ist.

11. Rotationspumpe nach einem der vorhergehenden Ansprüche, wobei die Rotationspumpe eine weitere, zweite Stellkammer (23) zur Beaufschlagung der Stellstruktur (3) mit einem in eine der beiden Stellrichtungen wirkenden Stelldruck eines Stellfluids aufweist, wobei die zweite Stellkammer (23) zur Beaufschlagung der Stellstruktur (3) mit einem vorzugsweise in die zweite Stellrichtung wirkenden Stelldruck des Stellfluids vorgesehen ist.

12. Rotationspumpe nach einem der vorhergehenden Ansprüche, wobei
- der Normalenvektor der Druckausgleichsfläche (3a) parallel zu den Stellrichtungen insgesamt eine Stellrichtungskomponente größer Null aufweist,
- der Normalenvektor der Druckstellfläche (22a) der ersten Stellkammer (22) parallel zu den Stellrichtungen insgesamt eine Stellrichtungskomponente aufweist und
- die Stellrichtungskomponente der Druckstellfläche (22a) der ersten Stellkammer (22) wenigstens dreimal oder wenigstens fünfmal oder wenigstens zehnmal größer als die Stellrichtungskomponente der Druckausgleichsfläche (3a) ist.

13. Rotationspumpe nach einem vorhergehenden Ansprüche, wobei durch den Querversatz der Gleitflächen (3b, 3c) eine effektive Druckausgleichsfläche (3a`) erhalten wird, auf die ein im Gehäuse (1) auf der Hochdruckseite herrschender Druck in die erste Stellrichtung zur Erzeugung der äußere Zusatzkraft (Fa) wirkt.

14. Rotationspumpe nach einem der vorhergehenden Ansprüche, wobei die äußere Zusatzkraft (Fa) einer der inneren Kraft (Fi) entgegenwirkenden Ausgleichskraft entspricht.

## Claims

1. A rotary pump having an adjustable specific delivery volume, preferably a vane pump, the rotary pump comprising:
(a) a housing (1) featuring a housing inlet and a low-pressure space (11), connected to the housing inlet, on a low-pressure side of the pump and featuring a housing outlet and a high-pressure space (21), connected to the housing outlet, on a high-pressure side of the pump;
(b) a delivery chamber into which a delivery chamber inlet (10) connected to the low-pressure space (11) opens on the low-pressure side and into which a delivery chamber outlet (20) connected to the high-pressure space (21) opens on the high-pressure side;
(c) a delivery rotor (2) which can be rotated about an axis of rotation in the delivery chamber;
(d) a setting structure (3) which can be moved back and forth in a first setting direction and, counter to the first setting direction, in a second setting direction in order to perform a setting movement which adjusts the specific delivery volume of the rotary pump; and
(e) at least a first setting chamber (22) for charging the setting structure (3) with a setting pressure of a setting fluid which acts in the second setting direction,
(f) wherein the fluid pressure in the high-pressure space (21) acts on a pressure equalisation surface (3a) on the outer circumference of the setting structure (3), and the pressure equalisation surface (3a) has a pressure surface asymmetry, resulting in an external additional force (Fₐ) which acts on the setting structure (3) in the first setting direction, wherein
(g) the outer circumference of the setting structure (3) has a first sliding surface (3b), for forming a first sealing gap with the housing (1), and a second sliding surface (3c) for forming a second sealing gap with the housing (1), and
(h) the sliding surfaces (3b, 3c) are offset relative to one another, transversely with respect to the first and second setting directions,
**characterised in that**
(i) the pressure equalisation surface (3a) extends in the circumferential direction from the first sealing gap up to the second sealing gap,
(j) such that the normal vector of the pressure equalisation surface (3a) for generating the external additional force (Fₐ) points counter to the first setting direction.

2. The rotary pump according to the preceding claim, wherein the high-pressure space (21) is provided downstream of the delivery chamber outlet (20) and upstream of the housing outlet in the housing (1).

3. The rotary pump according to any one of the preceding claims, wherein at least most of the fluid which is delivered from the delivery chamber through the delivery chamber outlet (20) flows into the high-pressure space (21), preferably directly, and flows off out of the high-pressure space (21) via the housing outlet, such that at least most of the fluid, preferably all of the fluid, can flow off out of the pump from the delivery chamber via the high-pressure space (21).

4. The rotary pump according to any one of the preceding claims, wherein the normal vector of the pressure equalisation surface (3a) has a setting direction component parallel to the setting directions as a whole, which is greater than zero, and a transverse component transverse to the setting directions as a whole, and the transverse component is more than three times or more than five times or more than ten times as large as the setting direction component.

5. The rotary pump according to any one of the preceding claims, wherein the high-pressure space (21) is connected in fluid communication to the delivery chamber via the setting structure (3).

6. The rotary pump according to any one of the preceding claims, wherein the pressure equalisation surface (3a) is a movable delineating wall of the high-pressure space (21), and a pressure prevailing in the high-pressure space (21) acts on the setting structure (3) via the pressure equalisation surface (3a), preferably towards the first setting chamber (22).

7. The rotary pump according to any one of the preceding claims, wherein a restoring element (4), preferably a spring, exerts a spring force which acts in the first setting direction on the setting structure (3).

8. The rotary pump according to any one of the preceding claims, wherein the setting movement of the setting structure (3) in the first setting direction increases the specific delivery volume, and the setting movement of the setting structure (3) in the second setting direction reduces the specific delivery volume.

9. The rotary pump according to any one of the preceding claims, wherein the fluid situated in the delivery chamber exerts a resultant internal force (Fᵢ) on the setting structure (3) which acts in one of the setting directions, for example in the second setting direction.

10. The rotary pump according to any one of the preceding claims, wherein the setting structure (3) can be moved linearly back and forth in the first setting direction and in the second setting direction.

11. The rotary pump according to any one of the preceding claims, wherein the rotary pump has another, second setting chamber (23) for charging the setting structure (3) with a setting pressure of a setting fluid which acts in one of the two setting directions, wherein the second setting chamber (23) is provided for charging the setting structure (3) with a setting pressure of the setting fluid which preferably acts in the second setting direction.

12. The rotary pump according to any one of the preceding claims, wherein:
- the normal vector of the pressure equalisation surface (3a) has a setting direction component parallel to the setting directions as a whole, which is greater than zero;
- the normal vector of the pressure setting surface (22a) of the first setting chamber (22) has a setting direction component parallel to the setting directions as a whole; and
- the setting direction component of the pressure setting surface (22a) of the first setting chamber (22) is at least three times or at least five times or at least ten times greater than the setting direction component of the pressure equalisation surface (3a).

13. The rotary pump according to the preceding claim, wherein the transverse offset of the sliding surfaces (3b, 3c) provides an effective pressure equalisation surface (3a'), on which a pressure prevailing in the housing (1) on the high-pressure side acts in the first setting direction in order to generate the external additional force (Fₐ).

14. The rotary pump according to any one of the preceding claims, wherein the external additional force (Fₐ) corresponds to an equalising force which acts counter to the internal force (Fᵢ).

## Revendications

1. Pompe rotative à volume de refoulement spécifique réglable, de préférence une pompe à ailettes, comprenant :
(a) un boîtier (1) présentant une entrée de boîtier et un espace basse pression (11) relié à l'entrée de boîtier sur un côté basse pression de la pompe ainsi qu'une sortie de boîtier et un espace haute pression (21) relié à la sortie de boîtier sur un côté haute pression de la pompe ;
(b) une chambre de refoulement, dans laquelle une entrée de chambre de refoulement (10) reliée à l'espace basse pression (11) débouche sur le côté basse pression et dans laquelle une sortie de chambre de refoulement (20) reliée à l'espace haute pression (21) débouche sur le côté haute pression ;
(c) un rotor de refoulement (2) rotatif autour d'un axe de rotation dans la chambre de refoulement ;
(d) une structure d'actionnement (3) mobile en va-et-vient dans une première direction d'actionnement et dans une seconde direction d'actionnement opposée à la première direction d'actionnement pour exercer un mouvement d'actionnement réglant le volume de refoulement spécifique de la pompe rotative ; et
(e) au moins une première chambre d'actionnement (22) pour appliquer à la structure d'actionnement (3) une pression d'actionnement d'un fluide d'actionnement agissant dans la seconde direction d'actionnement,
(f) la pression de fluide dans l'espace haute pression (21) agissant sur une surface de compensation de pression (3a) sur la circonférence extérieure de la structure de d'actionnement (3), la surface de compensation de pression (3a) présentant une asymétrie de surface de pression, ce qui entraîne une force supplémentaire externe (Fₐ) agissant sur la structure d'actionnement (3) dans la première direction d'actionnement,
(g) la structure d'actionnement (3) comportant une première surface de glissement (3b) sur sa circonférence extérieure pour former une première fente d'étanchéité avec le boîtier (1) et une seconde surface de glissement (3c) pour former une seconde fente d'étanchéité avec le boîtier (1), et
(h) les surfaces de glissement (3b, 3c) étant décalées l'une par rapport à l'autre en direction transversale aux première et seconde directions d'actionnement,
**caractérisée en ce que**
(i) la surface de compensation de pression (3a) s'étend dans la direction circonférentielle depuis la première fente d'étanchéité jusqu'à la seconde fente d'étanchéité,
(j) de telle sorte que le vecteur normal de la surface de compensation de pression (3a) pour générer la force supplémentaire externe (Fₐ) pointe à l'encontre de la première direction d'actionnement.

2. Pompe rotative selon la revendication précédente, dans laquelle l'espace haute pression (21) est prévu en aval de la sortie de chambre de refoulement (20) et en amont de la sortie de boîtier dans le boîtier (1).

3. Pompe rotative selon l'une quelconque des revendications précédentes, dans laquelle au moins une majeure partie du fluide refoulé depuis la chambre de refoulement par la sortie de chambre de refoulement (20) s'écoule dans l'espace haute pression (21), de préférence directement, et s'écoule depuis l'espace haute pression (21) par la sortie de boîtier, de telle sorte qu'au moins la majeure partie du fluide, de préférence tout le fluide, puisse s'écouler depuis la chambre de refoulement par l'espace haute pression (21) hors de la pompe.

4. Pompe rotative selon l'une quelconque des revendications précédentes, dans laquelle le vecteur normal de la surface de compensation de pression (3a) présente une composante de direction d'actionnement supérieure à zéro en direction parallèle aux directions d'actionnement en tout et une composante transversale en direction transversale aux directions d'actionnement en tout, la composante transversale étant plus de trois fois ou plus de cinq fois ou plus de dix fois plus grande que la composante de direction d'actionnement.

5. Pompe rotative selon l'une quelconque des revendications précédentes, dans laquelle l'espace haute pression (21) est relié en communication fluidique à la chambre de refoulement par la structure d'actionnement (3).

6. Pompe rotative selon l'une quelconque des revendications précédentes, dans laquelle la surface de compensation de pression (3a) est une paroi de limitation mobile de l'espace haute pression (21) et une pression régnant dans l'espace haute pression (21) agit sur la structure d'actionnement (3), de préférence contre la première chambre d'actionnement (22), par l'intermédiaire de la surface de compensation de pression (3a).

7. Pompe rotative selon l'une quelconque des revendications précédentes, dans laquelle un élément de rappel (4), de préférence un ressort, exerce sur la structure d'actionnement (3) une force élastique agissant dans la première direction d'actionnement.

8. Pompe rotative selon l'une quelconque des revendications précédentes, dans laquelle le mouvement d'actionnement de la structure d'actionnement (3) dans la première direction d'actionnement entraîne une augmentation du volume de refoulement spécifique et le mouvement d'actionnement de la structure d'actionnement (3) dans la seconde direction d'actionnement entraîne une réduction du volume de refoulement spécifique.

9. Pompe rotative selon l'une quelconque des revendications précédentes, dans laquelle le fluide situé dans la chambre de refoulement exerce sur la structure d'actionnement (3) une force interne résultante (Fᵢ) qui agit dans l'une des directions d'actionnement, par exemple dans la seconde direction d'actionnement.

10. Pompe rotative selon l'une quelconque des revendications précédentes, dans laquelle la structure d'actionnement (3) est mobile linéairement en va-et-vient dans la première direction d'actionnement et dans la seconde direction d'actionnement.

11. Pompe rotative selon l'une quelconque des revendications précédentes, dans laquelle la pompe rotative comporte en outre une seconde chambre d'actionnement (23) pour appliquer à la structure d'actionnement (3) une pression d'actionnement d'un fluide d'actionnement agissant dans l'une des deux directions d'actionnement, la seconde chambre d'actionnement (23) étant prévue pour appliquer à la structure d'actionnement (3) une pression d'actionnement du fluide d'actionnement agissant de préférence dans la seconde direction d'actionnement.

12. Pompe rotative selon l'une quelconque des revendications précédentes, dans laquelle
- le vecteur normal de la surface de compensation de pression (3a) présente une composante de direction d'actionnement supérieure à zéro en direction parallèle aux directions d'actionnement en tout,
- le vecteur normal de la surface d'actionnement de pression (22a) de la première chambre d'actionnement (22) présente une composante de direction d'actionnement en direction parallèle aux directions d'actionnement en tout, et
- la composante de direction d'actionnement de la surface d'actionnement de pression (22a) de la première chambre d'actionnement (22) est au moins trois fois ou au moins cinq fois ou au moins dix fois plus grande que la composante de direction d'actionnement de la surface de compensation de pression (3a).

13. Pompe rotative selon la revendication précédente, dans laquelle le décalage transversal des surfaces de glissement (3b, 3c) fournit une surface de compensation de pression effective (3a'), sur laquelle une pression régnant dans le boîtier (1) sur le côté haute pression agit dans la première direction d'actionnement pour générer la force supplémentaire externe (Fₐ).

14. Pompe rotative selon l'une quelconque des revendications précédentes, dans laquelle la force supplémentaire externe (Fₐ) correspond à une force de compensation contrecarrant la force interne (Fᵢ).
